# EUROPEAN PATENT APPLICATION

(11) **EP 0 978 459 A1**
(43) Date of publication of application: **09.02.2000**
(21) Application number: 98870178.5
(22) Date of filing: 07.08.1998
(51) Int. Cl.: B65D 33/28, B31B 19/90, B29C 65/02, B29C 65/08, B29C 65/22, B29C 65/00

(54) **Draw tape bag and method for its manufacture**

(71) Applicant: Fardem Belgium, 2340 Beerse (BE)
(72) Inventor: Vereycken, Walter, 2980 Zoersel (BE); Van Reusel, Herman, 2275 Lille-Gierle (BE)
(74) Representative: Van Reet, Joseph

(57) **Abstract**

The draw tape bag comprises opposite side walls (5) made of a thermoplastic material, two side edges (1), a lower edge (2), an upper hemmed edge, generally parallel to said lower edge (2) and including a hem (3) in each of said side walls (5) and a draw tape (8) within each of said hems (3). The side walls (5) being joint to one another along the two side edges (1) and the lower edge (2). In the area of the hems (3), the side walls (5) are welded together by a first weld (7) which also secures the draw tape (8) in the respective hem (3). This first weld (7) shows, in a longitudinal section thereof, a welding profile formed by a succession of different welding degrees including those welding degrees suited for welding the respective adjoining layers together. In this way a stronger weld can be obtained in the hem area, especially in case the bag is made of a biodegradable plastic material.

## Description

The present invention relates to a draw tape bag comprising opposite side walls made of a thermoplastic material, two side edges, a lower edge, an upper hemmed edge, generally parallel to said lower edge and including a hem in each of said side walls and a draw tape within each of said hems, the side walls being joint to one another along said two side edges and said lower edge, said side walls being welded together in the area of said hems by a first weld which also secures the draw tape in the respective hem.

Draw tape bags are already in general use and are disclosed, as well as the method for their manufacturing, in several patent publications. Reference can be made in particular to EP-A-0 235 965 and EP-A-0 314 466. The disclosed bags are made from a continuous web of thermoplastic sheet material which contains a longitudinal fold forming the lower edge of the bags. At the opposite side, the sheet material is folded to form a hem wherein a continuous draw tape is inserted. The side edges are formed by applying transverse welds to the web of sheet material. Transverse rows of perforations are further applied between the side welds of two adjoining bags so that these bags can be separated from one another.

In these two patent applications the side welds are produced by means of heated sealing blades or wires. A problem specifically discussed in EP-A-0 235 965 is that it is not possible to use a conventional side sealing blade due to the considerable difference in thickness of the body area and the draw tape area of the bag. A conventional side sealing blade tends indeed either to fail to seal the draw tape area, which comprises at least six layers, or to damage the body area of the bag, which comprises only two layers. In order to solve this problem, EP-A-0 235 965 proposes to use a side sealing blade having in the hemmed area of the bag a larger cross-section or a larger radius than in the body area so that a larger amount of heat can be transferred for achieving a good seal and a good fixation of the draw tape by this seal. A similar solution has been used in EP-A-0 314 466.

According to the present invention, it has however been found that, due to the relatively large amount of energy which is used for producing the side weld in the hemmed area, a considerably weakened line is produced along the edge of the weld which may considerably reduce the strength of fixation of the draw tape. This weakened line will be called hereinafter the "weld edge seam".

An object of the present invention is now to provide a draw tape bag wherein the negative effects of the weld seam edge on the strength of the bag are substantially reduced.

To this end, the draw tape bag according to the invention is characterised in that said first weld shows, in a longitudinal section thereof, a welding profile formed by a succession of different welding degrees including those welding degrees suited for welding the respective adjoining layers together.

In the longitudinal direction of the weld, the weld comprises thus area's wherein a large quantity of heat and/or pressure is applied so that the inner layers are optimally sealed and area's wherein a smaller quantity of heat and/or pressure is applied so that the outer layers are optimally sealed. As a result hereof, the weld edge seam does no longer run straightforward along the weld but makes different curves so that it has a larger length. The stresses exerted on the weld can thus be divided over a greater length resulting finally in an improvement of the total strength of the weld and of the fixation of the draw tape.

Preferably, there is a gradual transition between the different welding degrees.

This suppresses the weld edge seam phenomenon. Due to the gradual transition between the welding degrees, each couple of adjoining layers is optimally welded over a sufficiently large area to obtain a strong seal between the respective layers.

In case the bag is made of a thermoplastic material having a relatively high melting point, such as for example polyethylene or polypropylene, the above features will reduce the number of rejected bags or will, in other words, increase the production reliability since it allows higher tolerances of the welding apparatus. For bags made of a thermoplastic material with a lower melting point, such as biodegradable thermoplastic materials, it considerably reduces the difficulty of achieving a good seal in the hemmed area.

The present invention also relates to a method for manufacturing a bag according to the invention.

Further particularities and advantages of the invention will become apparent from the following description of some particular embodiments of the bag and the method according to the present invention. This description is however only given by way of illustrative example and is not intended to limit the scope of the claims. The reference numerals relate to the annexed drawings wherein :
Figure 1 shows a schematic side view of a bag according to the present invention joint to two similar adjoining bags in a string of bags made from a continuous web of thermoplastic sheet material ;
Figure 2 shows a perspective view of the upper sealer bar containing two heated wires for producing the side welds along the height of the bags shown in Figure 1;
Figure 3 shows a perspective view of the lower sealer bar containing two short heated wires provided with clamps for producing the weld of the hemmed area as shown in Figure 1 ;
Figure 4 shows schematically in the longitudinal direction of the side weld in the hemmed area of the bag, indication by lines II-II in Figure 1, the different welding degrees which are achieved by means of the sealer bars shown in Figures 2 and 3 ;
Figure 5 shows a schematic perspective view on an anvil of an ultrasonic welding apparatus which can alternatively be used for producing the side weld in the hemmed area of the bag ;
Figure 6 is similar to Figure 4 and shows the different welding degrees which are achieved by means of the anvil shown in Figure 5 in combination with a flat faced ultrasonic welding head ;
Figure 7 shows, on a larger scale, schematically a top plan view of an alternative side weld in the hemmed are of the bag ; and
Figure 8 shows schematically a perspective view on the end faces of an anvil and an ultrasonic welding head showing the grooved relief by which the weld shown in Figure 7 can be achieved.

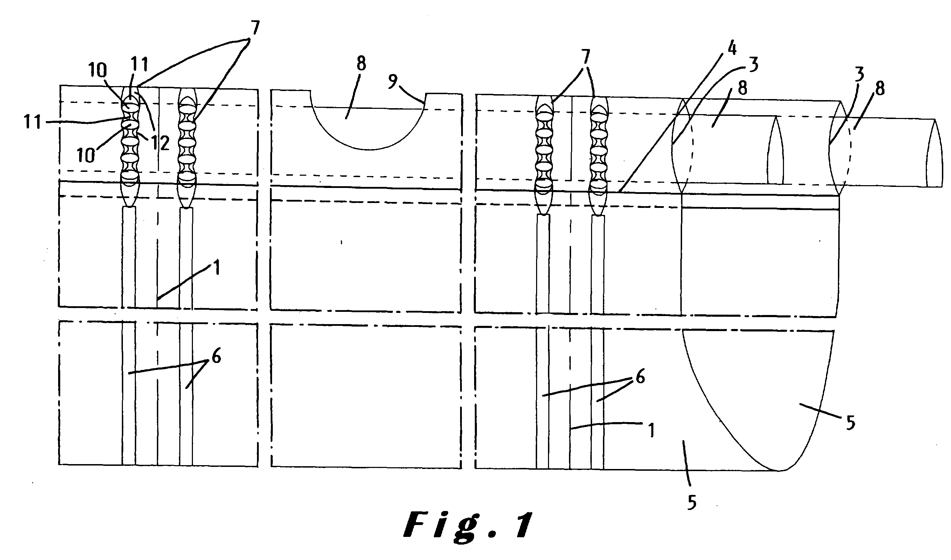

The draw tape bag shown in Figure 1 in a string of similar draw tape bags from which it is separated by perforated lines 1 is made of a sheet of thermoplastic material folded longitudinally along a fold forming the bottom or lower edge 2 of the bag. On the upper side of the bag, the free extremities of the sheet are folded inwards to form, on each side of the bag opening, a hem 3. A weld 4 fixes the folded portion of the thermoplastic sheet to the portion of the sheet forming the respective side wall 5 of the bag. Along both perforated lines, i.e. along the two side edges of the bag, the opposite side walls 5 are directly fixed together by means of a weld 6 and, in the hemmed area, by means of a weld 7. In the hems 3, a draw tape 8 is inserted which can be gripped through a hole 9 in the respective hem 3 and tightened to close the bag. Further details about the general construction of the bag and the possible ways of manufacturing it need not be given since they are already known. Reference can be made in particular to EP-A-0 235 965 and EP-A-0 314 466.

An essential feature of the invention is however the way wherein the bag is welded along its side edges 1 in the hemmed area 3 of the bag. In this hemmed area, at least six layers of thermoplastic material have to be welded together and, in the embodiment shown in the figures, even eight due to the fact that the draw tape 8 is folded to form two layers. This large number of layers makes it difficult to guarantee a good fixation between the different adjoining layers and in particular to guarantee a sufficiently strong fixation of the draw tapes 8. This problem is posed especially in case the bags are made from a biodegradable thermoplastic material (often made containing starch), such as for example Bioflex, Mater bi, Bak, Biopol and the like which have a relatively low melting point. However, also in case of the usual synthetic thermoplastic materials, such as LDPE, HDPE, LLDPE, PP and the like, which have a considerably higher melting point, it is desirable to achieve a stronger fixation of the draw tape and especially to reduce the number of bags which do not meet the required quality standards, in other words to allow larger variations in the functioning of the welding apparatus without quality reduction.

According to the invention, the side weld 7 in the hemmed area of the bag is not homogeneous in the longitudinal direction of the weld but this weld shows, in the longitudinal direction, a welding profile formed by a succession of different welding degrees. The different welding degrees are essentially the result of different amounts of energy applied to the materials to be welded and are determined by the temperature and pressure used for realising the weld and by the time during which this temperature and pressure is maintained. The different welding degrees correspond thus to different degrees of fusion and/or compression of the welded layers. They comprise the higher welding degrees suited for welding the innermost layers together and the lower welding degrees suited for welding the outermost layers together.

In Figure 1, the area's of three different welding degrees have been indicated with reference numerals 10, 11, 12. In the area's 10 with the highest welding degree, obtained as explained hereinafter by thermal welding, by the combination of a higher heat transfer and a higher pressure, the material of the different layers is pressed away at least partially so that a recess is formed. In some locations, the material may even be pressed away entirely so that a hole is formed. In the area's 12 with the lowest welding degree, the outermost layers are welded together but to a less extend the inner layers which, in some locations, may even not be welded to one another. In the intermediate area's 11, the intermediate layers are optimally welded to one another. As it appears from Figure 1, there is a gradual transition between the different welding degrees so that the optimum welding degrees are achieved over a sufficiently large area for the different adjoining layers. In this way, the above-discussed weld edge seam phenomenon is also reduced thus contributing to a stronger weld.

An important advantage of the invention is that not only the different adjoining layers are locally optimally welded to one another but also that the remaining weld edge seam is now longer compared to a straight edge. As a result thereof, stresses exerted on the weld are divided over a longer distance which results in an improved global strength of the weld and the fixation of the draw tape.

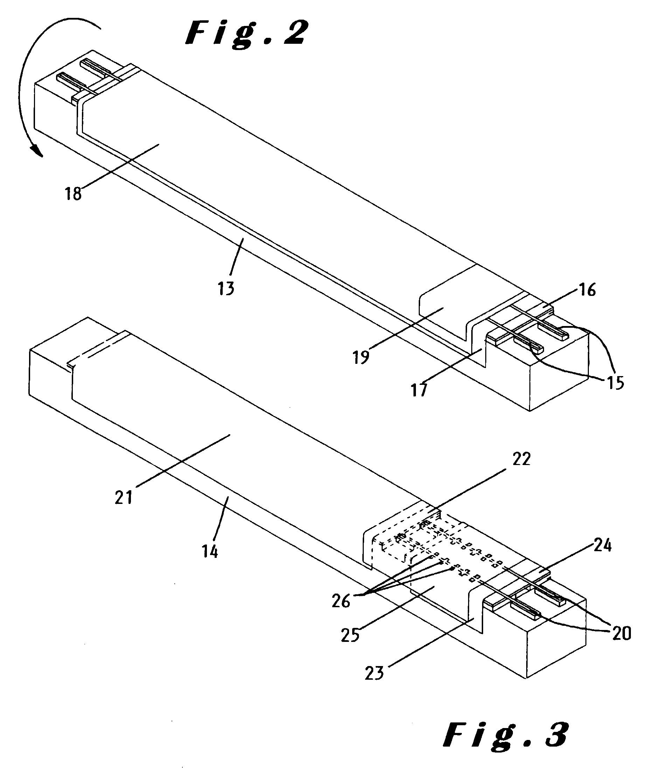

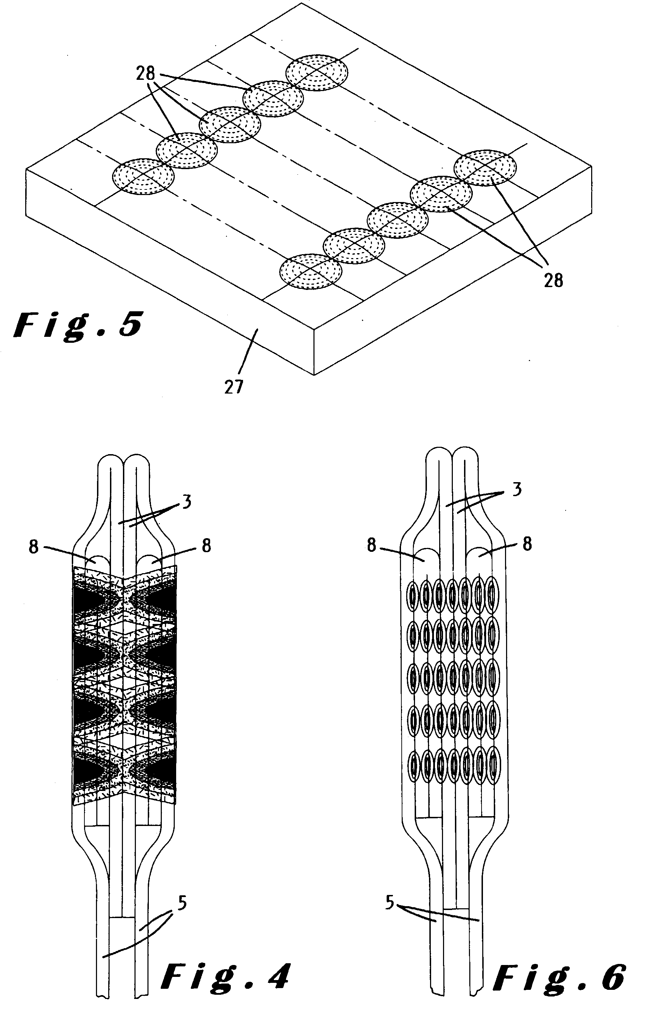

The weld 7, shown in Figure 1, can be achieved by thermal welding, more particularly by a welding apparatus, the upper and lower sealing bars 13 and 14 respectively, have been shown respectively in Figures 2 and 3. Since the general construction of these sealing bars is already known, it will be discussed only very shortly hereinafter.

The upper sealing bar 13 is provided with two heated sealing wires 15 resting on a supporting plate 16 covered by a thick non-adhering heat resistant layer 17 made in particular from PTFE. The sealing wires 15 themselves are also covered by a thinner non-adhering heat resistant layer 18 and, in the hemmed area of the bags, additionally by a local thick non-adhering heat resistant layer 19.

The lower sealing bar 14 is also provided with two heated sealing wires 20 which extend however only in the hemmed area of the bags which are to be sealed. In the remaining area, the sealing bar is only covered with a thick non-adhering heat resistant layer 21 supported by a rigid plate 22. The sealing wires 20 rest onto a thick non-adhering heat resistant layer 23 supported by a rigid plate 24 and are covered by a thick Non-adhering heat resistant layer 25.

An important feature of the sealing bars shown in Figures 2 and 3 is that, for achieving the desired welding profile, clamps 26 made of sealing wire are attached to the sealing wires 20 of the lower sealing bar 14. In this way, a larger heat transfer and/or a higher pressure can be achieved in the location of the clamps 26, i.e. the higher welding degrees required for producing the recessed area's 10. The obtained distribution of the different welding degrees has also been shown schematically in Figure 4, in a cross-sectional view through the hemmed area of the bag. In this Figure, a higher welding degree, i.e. a higher temperature and pressure, has been indicated with a darker hatching whilst a lower welding degree has been indicated with a lighter hatching. In the weld produced by such different welding degrees, a relief will of course be formed since, due to the higher temperature and pressure in the darker area's, the material of the different layers will be partially pressed away. These deformations have not been shown in Figure 4.

According to the invention, a particular preference is given to ultrasonic instead of conventional thermal welding of the hemmed area of the bags. Ultrasonic welding is especially preferred in case the bag is made of a biodegradable thermoplastic material since it considerably reduces the cooling time and thus the production time thereof which is much longer for such biodegradable materials than for example for PE or PP. Indeed, by ultrasonic welding, less energy has to be transferred to the material since the heat is especially generated in the contact area between the different layers but nearly not in the layers themselves. Ultrasonic welding further make it easier to weld several biodegradable layers together and enables to weld different materials together so that the draw tape may be made of a material different from the material of the bag, for example also of a non-thermoplastic material such a linen.

Figure 5 shows a possible anvil 27 of an ultrasonic welding apparatus by means of which a weld 7 according to the invention can be achieved. An important feature of this anvil 27 is that the surface thereof is provided with bulges 28 which provide for a higher pressure and an increased transfer of ultrasonic energy. The distribution of the different welding degrees achieved with such an anvil 27, in combination with a flat ultrasonic head, is shown in Figure 6, in a cross-sectional view of the hemmed area of the bags. Just like in Figure 4, the relief which will be formed by the bulges 28 in the surface of the weld has not been shown in Figure 6. In a variant embodiment, the head of the ultrasonic welding apparatus could also be provided with bulges and, in a further variant, the bulges on the anvil 27 could be omitted.

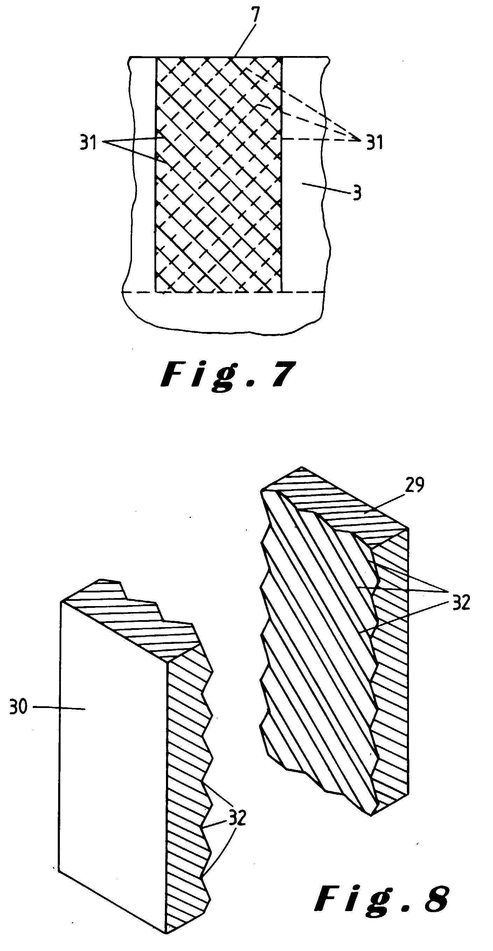

Figure 7 shows a top plan view on a variant weld 7 produced by an ultrasonic welding apparatus comprising a grooved anvil 29 and welding head 30 as illustrated schematically in Figure 8. The weld 7 produced by this apparatus shows two opposite faces provided with grooves 31. An important feature of these grooves 31 is that the grooves 31 in one face of the weld 7 forms an angle with respect to the grooves 31 in the other face of the weld 7. In Figure 7, the grooves 31 are more particularly perpendicular to one another. At the intersection of the bottoms of the grooves 31, there has been exerted such a large pressure during the welding operation that nearly all the material of the layers has been pressed away. In these locations, the welding degree was therefore the highest. In the peripheral area around these central locations, the welding degree decreases gradually towards the top of the grooves 31, the lowest welding degrees being situated at the theoretical crossing of the tops of two grooves. When referring to the grooves 32 in the welding apparatus illustrated in Figure 8, the situation is of course the reverse since tops of the grooves 32 in the welding tools correspond to the bottoms of the grooves 31 in the weld 7.

Although a particular preference is given to an ultrasonic welding apparatus for sealing the hemmed area of the bags, the relief shown in Figure 8 could also be applied to the sealing blades of a conventional thermal welding apparatus. For the remaining part of the weld 6 along the side edges 1 of the bags, preference is, on the contrary, given according to the invention to a conventional thermal weld so that the side weld is preferably a combination of an ultrasonic weld 7 in the hemmed area of the bag and a thermal weld 6 in the body area of the bag.

From the above description it will be clear that many modifications can be applied to the described embodiment without leaving the scope of the annexed claims.

In particular, it should be noted that the different existing techniques can be used for producing the weld according to the invention in the hemmed area of the bags, including :
a) welding by means of a heated sealblade (by providing a profile in the sealblade);
b) welding by means of heated sealwires (by applying thickenings or narrowings in or onto the sealwires);
c) welding by means of a heated sealwire and a counter bar (by applying thickenings or narrowings in or onto the sealing wires and/or counter bars);
d) ultrasonic welding (by providing the welding head and/or the anvil with a profile).

## Claims

1. A draw tape bag comprising opposite side walls (5) made of a thermoplastic material, two side edges (1), a lower edge (2), an upper hemmed edge, generally parallel to said lower edge (2) and including a hem (3) in each of said side walls (5) and a draw tape (8) within each of said hems (3), the side walls (5) being joint to one another along said two side edges (1) and said lower edge (2), said side walls (5) being welded together in the area of said hems (3) by a first weld (7) which also secures the draw tape (8) in the respective hem (3), characterized in that said first weld (7) shows, in a longitudinal section thereof, a welding profile formed by a succession of different welding degrees including those welding degrees suited for welding the respective adjoining layers together.

2. A bag according to claim 1, characterized in that in said welding profile there is a gradual transition between the different welding degrees.

3. A bag according to either one of the claims 1 and 2, characterized in that said different welding degrees correspond to different compression and/or fusion degrees of the welded layers.

4. A bag according to any one of the claims 1 to 3, characterized in that said welding profile comprises points (12) with a low welding degree wherein the innermost layers are not or almost not welded to one another.

5. A bag according to any one of the claims 1 to 4, characterized in that said welding profile comprises points (10) with a high welding degree wherein the material of the different layers is in particular entirely or almost entirely pressed away.

6. A bag according to any one of the claims 1 to 5, characterized in that said first weld is composed of several welding spots comprising a central area of a high welding degree and a peripheral area of a low welding degree, the welding degree increasing gradually from the peripheral area to the central area and vice versa.

7. A bag according to any one of the claims 1 to 6, characterized in that said first weld (7) has two opposite grooved faces, the grooves (31) in one face forming an angle with respect to the grooves (31) in the other face and extending preferably perpendicularly thereto.

8. A bag according to claim 7, characterized in that in the points of intersection of the grooves (31) on the two faces, the material of the different layers is entirely or almost entirely pressed away.

9. A bag according to any one of the claims 1 to 8, characterized in that said thermoplastic material is a biodegradable material.

10. A method for manufacturing a draw tape bag according to any one of the claims 1 to 9 and comprising opposite side walls (5) made of a thermoplastic material, two side edges (1), a lower edge (2), an upper hemmed edge, generally parallel to said lower edge (2) and including a hem (3) in each of said side walls and a draw tape (8) within each of said hems (3), the side walls (5) being joint to one another along said two side edges (1) and said lower edge (2), in which method said side walls (5) are welded together in the area of said hems (3) by a first weld (7) which also secures the draw tape (8) in the respective hem (3), characterized in that said first weld (7) is produced, in a longitudinal direction thereof, according to a welding profile formed by a succession of different welding degrees including those welding degrees suited for welding the respective adjoining layers together.

11. A method according to claim 10, characterized in that said first weld is produced by an ultrasonic welding process.

12. A method according to claim 10, characterized in that said first weld is produced by a thermal welding process.

13. A method according to any one of the claims 10 to 12, characterized in that said different welding degrees are obtained by applying different pressures and/or amounts of ultrasonic or thermal energy onto the layers which are to be welded together.
